# FASCICULE DE BREVET EUROPEEN

(11) **EP 0 852 195 B1**
(45) Date de publication et mention de la délivrance du brevet: **02.04.2003**
(21) Numéro de dépôt: 97122032.2
(22) Date de dépôt: 15.12.1997
(51) Int. Cl.: B60S 1/04, B60S 1/34

(54) **Système d'essuyage comportant un palier en matière plastique**
Scheibenwischersystem mit einem Kunststofflager
Wiper system with a plastic bearing

(30) Priorité: 27.12.1996 FR 9616244
(43) Date de publication de la demande: 08.07.1998
(73) Titulaire: VALEO SYSTEMES D'ESSUYAGE, 78321 La Verrière (FR)
(72) Inventeur: Morin, Pascal, 86100 Chatellerault (FR)
(74) Mandataire: Gamonal, Didier

(56) Documents cités:
- FR-A- 2 724 890
- US-A- 3 910 652
- US-A- 4 716 617

## Description

L'invention concerne un système d'essuyage comportant un palier en matière plastique muni d'un insert de renfort.

L'invention concerne plus particulièrement un système d'essuyage d'une vitre de véhicule automobile, du type dans lequel un essuie-glace est entraîné en rotation par un arbre d'entraînement qui est monté pivotant autour de son axe dans un palier lié à la caisse du véhicule, du type dans lequel le palier comporte un corps de palier muni d'une oreille qui s'étend sensiblement selon une direction perpendiculaire à la direction de l'axe de l'arbre et qui comporte des moyens de liaison du palier avec la caisse du véhicule, du type dans lequel le palier est lié à un composant du système d'essuyage par un bras de liaison, et du type dans lequel le corps de palier est réalisé par moulage.

Il a déjà été proposé dans la demande de brevet français (FR-A-2 724 890) un palier réalisé en matière plastique surmoulée sur une extrémité de bras de liaison.

Une telle conception d'un palier d'arbre d'entraînement est particulièrement avantageuse en ce qu'elle permet de réaliser un palier de poids réduit.

Par ailleurs, la réalisation du corps de palier par moulage de matière plastique permet de réaliser des formes complexes, ce qui autorise l'implantation d'un tel type de palier dans un nombre important de véhicules, quelles que soient les contraintes d'encombrement rencontrées.

Toutefois, dans certains cas d'utilisations particulièrement sévères, il est apparu nécessaire d'augmenter la tenue mécanique du palier pour faire face notamment à une augmentation du couple d'essuyage transmis à l'essuie-glace.

L'invention a donc pour objet de proposer une nouvelle conception d'un palier pour un système d'essuyage qui permette d'augmenter la rigidité et la tenue mécanique du palier sans en augmenter de manière importante le poids, et en préservant les avantages conférés par la réalisation d'un corps de palier en matière plastique moulée.

À cet effet, l'invention propose un système d'essuyage du type décrit précédemment (FR-A-2 724 890), caractérisé en ce que le corps de palier comporte au moins un insert de renfort qui délimite une ouverture destinée à recevoir un organe de liaison à la caisse du véhicule et/ou à un composant du système d'essuyage.

Selon des modes de réalisation de l'invention :
- l'insert de renfort est agencé au niveau de l'oreille et délimite, dans l'oreille, un orifice destiné à recevoir des moyens de fixation du palier sur la caisse du véhicule ;
- l'insert de renfort de l'oreille s'étend selon une direction transversale sensiblement perpendiculaire à l'axe de l'arbre d'entraînement et l'insert comporte un extrémité transversale dans laquelle est aménagée un perçage qui délimite l'ouverture circulaire ;
- l'insert de renfort de l'oreille présente sensiblement la forme d'une plaque ;
- l'insert de renfort est réalisé d'une seule pièce avec une extrémité du bras de liaison qui est noyée dans le corps de palier ;
- le bras de liaison est réalisé sous la forme d'un tube creux, et l'extrémité du bras qui est noyée dans le corps de palier est aplatie ;
- l'insert de renfort délimite une cavité dans laquelle est reçue une extrémité du bras de liaison ;
- la cavité délimitée par l'insert de renfort est sensiblement cylindrique, et l'insert comporte un tronçon qui n'est pas de révolution pour empêcher tout pivotement de l'insert dans le corps de palier ;
- le corps de palier comporte un insert de renfort de l'oreille et un insert qui délimite une cavité dans laquelle est reçue une extrémité du bras de liaison ;
- les deux inserts de renfort sont réalisés en une seule pièce.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe axiale d'un premier mode de réalisation d'un palier conforme aux enseignements de l'invention ; et

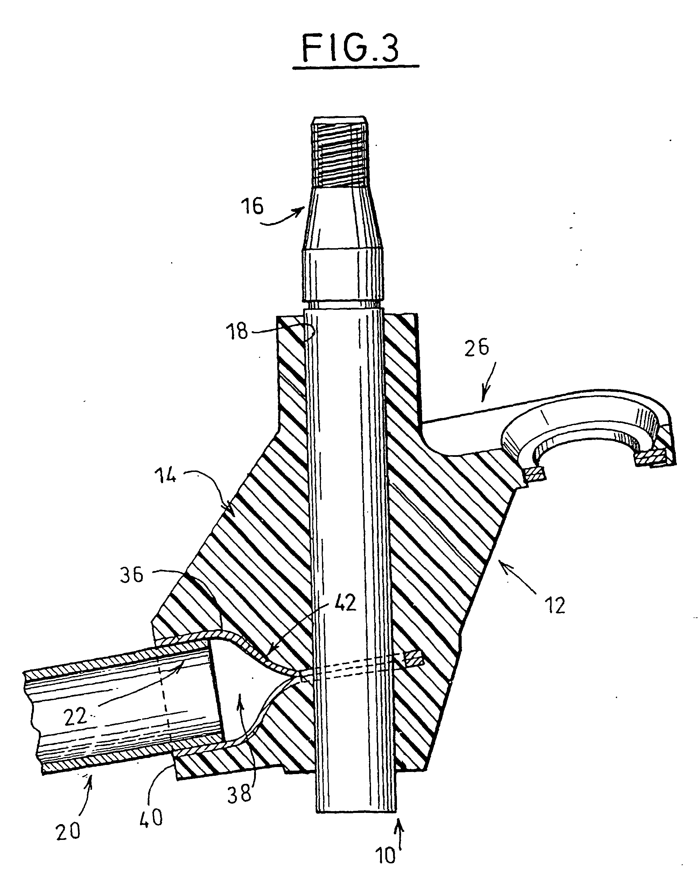

- les figures 2 et 3 sont des vues similaires à celle de la figure 1 illustrant un deuxième et un troisième mode de réalisation de l'invention.

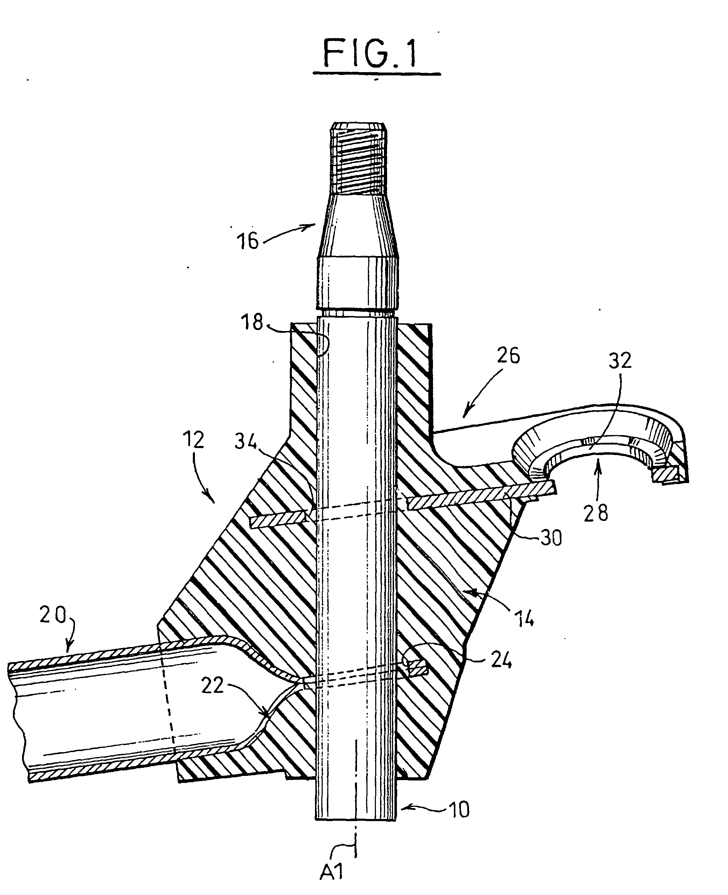

On a représenté sur la figure 1 un arbre d'entraînement 10 d'axe A1 qui est monté à rotation autour de son axe dans un palier 12 dont le corps de palier 14 est réalisé par moulage en matière plastique.

L'arbre d'entraînement 10, sur une extrémité supérieure 16 duquel est destiné à être monté un essuie-glace (non représenté), est monté directement à rotation dans un alésage cylindrique 18 du corps de palier 12. Eventuellement, il est possible d'interposer entre l'arbre 10 et l'alésage 18 des coussinets en matériau à faible coefficient de frottement.

Le palier 12 est relié à d'autres composants (non représentés) d'un système d'essuyage par un bras de liaison 20 qui s'étend sensiblement perpendiculaire à l'axe A1 de l'arbre 10 et qui comporte une extrémité transversale 22 noyée dans une extrémité inférieure du corps de palier 14.

Le bras de liaison 20 est ici réalisé sous la forme d'un tube cylindrique de révolution mais, pour éviter qu'il ne puisse pivoter autour de son axe par rapport au corps de palier 14, son extrémité transversale 22 noyée dans le corps de palier 14 est aplatie de manière à présenter deux éléments de plaques superposés qui comportent un perçage circulaire 24 au travers duquel s'étend l'arbre 10.

Pour sa fixation sur un élément de la caisse du véhicule (non représenté), le palier 12 comporte une oreille 26 qui s'étend selon une direction transversale sensiblement perpendiculaire à l'axe A1 de l'arbre 10. De manière connue, l'oreille 26 comporte un orifice circulaire 28 qui est destiné à recevoir un bloc amortisseur cylindrique (non représenté) pour éviter la transmission des vibrations entre le système d'essuyage et la caisse du véhicule.

Conformément aux enseignements de l'invention, le corps de palier 14 est surmoulé autour d'un insert de renfort 30 qui est réalisé sous la forme d'une plaque et qui s'étend dans un plan parallèle au plan de l'oreille 26, à l'intérieur de celle-ci.

Le renfort 30 comporte ainsi une extrémité transversale dans laquelle est aménagé un perçage 32 qui délimite l'orifice circulaire 28 destiné à recevoir le bloc amortisseur.

A son extrémité transversale opposée, l'insert de renfort 30 comporte un perçage 34 au travers duquel est reçu l'arbre 10.

Avantageusement, l'insert de renfort 30 permet de rigidifier de manière importante l'oreille 26. A cet effet, il peut être réalisé indifféremment en un matériau plastique particulièrement rigide ou en un matériau métallique.

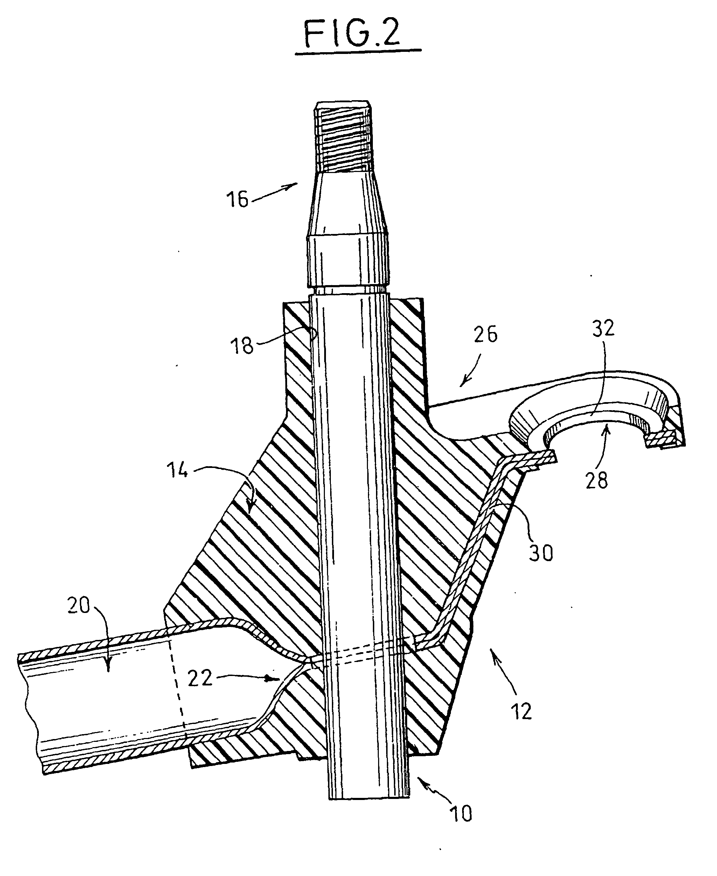

On a représenté sur la figure 2 un deuxième mode de réalisation de l'invention dans lequel l'insert de renfort 30 est réalisé d'une seule pièce avec le bras de liaison 20. L'insert 30, qui s'étend en travers du corps de palier 14, est ici réalisé dans le prolongement de la portion aplatie de l'extrémité transversale 22 du bras 20 qui est noyée dans le corps de palier 14.

Ce mode de réalisation de l'invention permet avantageusement de n'avoir à réaliser le placement que d'un seul insert dans le moule lors de l'opération de surmoulage du corps de palier 14.

Dans un troisième mode de réalisation de l'invention, il est prévu un insert de renfort 36 qui permet d'assurer une liaison de grande résistance entre le corps de palier 14 et le bras de liaison 20.

En effet, dans ce mode de réalisation, l'insert de renfort 36 délimite dans le corps de palier 14 une cavité cylindrique 38 qui débouche dans une face latérale 40 du corps de palier 14. L'extrémité 22 du bras 20 est destinée dans ce mode de réalisation à être emmanchée à l'intérieur de la cavité 38. Éventuellement la fixation du bras de liaison 20 pourra être complétée au moyen d'un collage de l'extrémité 22 dans la cavité 38 ou en prévoyant de munir une surface externe de cette extrémité 22 de stries susceptibles d'empêcher toute rotation de l'arbre 20 autour de son axe dans la cavité 38 délimitée par l'insert de renfort 36.

Dans l'exemple de réalisation illustré sur les figures, l'insert de renfort 36 est réalisé à partir d'un tube métallique dont un tronçon 42 est aplati pour empêcher toute rotation de l'insert 36 dans le corps de palier 14, et il comporte un perçage au travers duquel est reçu l'arbre d'entraînement 10.

Bien entendu, il est aussi possible de prévoir la réalisation d'un palier 12 comportant à la fois un insert de renfort 30 agencé au niveau de l'oreille 26 et un insert 36 formant une cavité 38 destinée à recevoir l'extrémité 22 du bras de liaison 20. De manière similaire au deuxième mode de réalisation de l'invention, ces deux inserts peuvent être alors réalisés d'une seule pièce, par exemple à partir d'un tube métallique dont un tronçon est aplati pour former l'insert 30 de renfort de l'oreille 26.

## Revendications

1. Système d'essuyage d'une vitre de véhicule automobile, du type dans lequel un essuie-glace est entraîné en rotation par un arbre d'entraînement (10) qui est monté pivotant autour de son axe (A1) dans un palier (12) lié à la caisse du véhicule, du type dans lequel le palier (12) comporte un corps de palier (14) muni d'une oreille (26) qui s'étend sensiblement selon une direction perpendiculaire à la direction de l'axe (A1) de l'arbre (10) et qui comporte des moyens de liaison du palier (12) avec la caisse du véhicule, du type dans lequel le palier (12) est lié à un composant du système d'essuyage par un bras de liaison (20), et du type dans lequel le corps de palier (14) est réalisé par moulage,
**caractérisé en ce que** le corps de palier (14) comporte au moins un insert de renfort (30, 36) qui délimite une ouverture (28, 38) destinée à recevoir un organe de liaison à la caisse du véhicule et/ou à un composant du système d'essuyage.

2. Système d'essuyage selon la revendication 1, **caractérisé en ce que** l'insert de renfort (30) est agencé au niveau de l'oreille (26) et délimite, dans l'oreille (26), un orifice (28) destiné à recevoir des moyens de fixation du palier (12) sur la caisse du véhicule.

3. Système d'essuyage selon la revendication 2, **caractérisé en ce que** l'insert de renfort (30) de l'oreille (26) s'étend selon une direction transversale sensiblement perpendiculaire à l'axe (A1) de l'arbre d'entraînement (10) et **en ce que** l'insert (30) comporte une extrémité transversale dans laquelle est aménagé un perçage (32) qui délimite l'ouverture circulaire (28).

4. Système d'essuyage selon la revendication 3, **caractérisé en ce que** l'insert de renfort (30) de l'oreille (26) présente sensiblement la forme d'une plaque.

5. Système d'essuyage selon l'une quelconque des revendications 2 à 4, **caractérisé en ce que** l'insert de renfort (30) est réalisé d'une seule pièce avec une extrémité (22) du bras de liaison (20) qui est noyée dans le corps de palier (14).

6. Système d'essuyage selon la revendication 5, **caractérisé en ce que** le bras de liaison (20) est réalisé sous la forme d'un tube creux, et **en ce que** l'extrémité (22) du bras (20) qui est noyée dans le corps de palier (14) est aplatie.

7. Système d'essuyage selon la revendication 1, **caractérisé en ce que** l'insert de renfort (36) délimite une cavité (38) dans laquelle est reçue une extrémité (22) du bras de liaison (20).

8. Système d'essuyage selon la revendication 7, **caractérisé en ce que** la cavité (38) délimitée par l'insert de renfort (36) est sensiblement cylindrique, et **en ce que** l'insert (36) comporte un tronçon qui n'est pas de révolution pour empêcher tout pivotement de l'insert (36) dans le corps de palier (14).

9. Système d'essuyage selon l'une quelconque des revendications précédentes, **caractérisé en ce que** le corps de palier (14) comporte un insert (30) de renfort de l'oreille (26) et un insert (36) qui délimite une cavité (38) dans laquelle est reçue une extrémité (22) du bras de liaison (20).

10. Système d'essuyage selon la revendication 9, **caractérisé en ce que** les deux inserts de renfort (30, 36) sont réalisés en une seule pièce.

## Claims

1. A system for wiping a motor vehicle window, of the type in which a wiper is driven rotationally by a drive shaft (10) mounted so as to pivot about its axis (A1) in a bearing (12) connected to the vehicle bodywork, of the type in which the bearing (12) comprises a bearing body (14) provided with a lug (26) which extends substantially in a direction perpendicular to the direction of the axis (A1) of the shaft (10) and which comprises means of connecting the bearing (12) with the body of the vehicle, of the type in which the bearing (12) is connected to a component of the wiping system by a connecting arm (20), and of the type in which the bearing body (14) is produced by moulding,
**characterised in that** the bearing body (14) comprises at least one reinforcing insert (30, 36) which delimits an opening (28, 38) intended to receive a member for connecting to the body of the vehicle and/or a component of the wiping system.

2. A wiping system according to Claim 1, **characterised in that** the reinforcing insert (30) is arranged at the lug (26) and delimits, in the lug (26), an orifice (28) intended to receive means of fixing the bearing (12) to the body of the vehicle.

3. A wiping system according to Claim 2, **characterised in that** the reinforcing insert (30) for the lug (26) extends in a transverse direction substantially perpendicular to the axis (A1) of the drive shaft (10) and **in that** the insert (30) comprises a transverse end in which there is provided a drilling (32) which delimits the circular opening (28).

4. A wiping system according to Claim 3, **characterised in that** the reinforcing insert (30) for the lug (26) is substantially in the form of a plate.

5. A wiping system according to any one of Claims 2 to 4, **characterised in that** the reinforcing insert (30) is produced in a single piece with an end (22) of the connecting arm (20) which is embedded in the bearing body (14).

6. A wiping system according to Claim 5, **characterised in that** the connecting arm (20) is produced in the form of a hollow tube, and **in that** the end (22) of the arm (20) which is embedded in the bearing body (14) is flattened.

7. A wiping system according to Claim 1, **characterised in that** the reinforcing insert (36) delimits a cavity (38) in which one end (22) of the connecting arm (20) is received.

8. A wiping system according to Claim 7, **characterised in that** the cavity (38) delimited by the reinforcing insert (36) is substantially cylindrical, and **in that** the insert (36) has a portion which is not of revolution in order to prevent any pivoting of the insert (36) in the bearing body (14).

9. A wiping system according to any one of the preceding claims, **characterised in that** the bearing body (14) comprises a reinforcing insert (30) for the lug (26) and an insert (36) which delimits a cavity (38) in which one end (22) of the connecting arm (20) is received.

10. A wiping system according to Claim 9, **characterised in that** the two reinforcing inserts (30, 36) are produced in a single piece.

## Patentansprüche

1. Wischsystem einer Kraftfahrzeugscheibe, bei dem die Rotation eines Scheibenwischers von einer Antriebswelle (10) angetrieben wird, die um ihre Achse (A1) schwenkbar in einem mit dem Fahrzeugkasten verbundenen Lager (12) montiert ist, wobei das Lager (12) einen Lagerkörper (14) umfasst, der mit einem Henkel (26) ausgestattet ist, der sich etwa nach einer zur Achsrichtung (A1) der Welle (10) lotrecht verlaufenden Richtung erstreckt und Verbindungsmittel des Lagers (12) mit dem Fahrzeugkasten aufweist, wobei das Lager (12) über einen Verbindungsarm (20) mit einem Bestandteil des Wischsystems verbunden ist, und wobei der Lagerkörper (14) per Formerei hergestellt ist, **dadurch gekennzeichnet, dass** der Lagerkörper (14) mindestens ein Verstärkungsteil (30, 36) aufweist, das eine Öffnung (28, 38) für die Aufnahme eines Verbindungsorgans mit dem Fahrzeugkasten und/oder mit einem Bestandteil des Wischsystems abgrenzt.

2. Wischsystem nach Anspruch 1, **dadurch gekennzeichnet, dass** das Verstärkungsteil (30) am Henkel (26) vorgesehen ist und innerhalb des Henkels (26) eine Öffnung (28) für die Aufnahme von Befestigungsmitteln (12) des Lagers (12) am Fahrzeugkasten abgrenzt.

3. Wischsystem nach Anspruch 2, **dadurch gekennzeichnet, dass** sich das Verstärkungsteil (30) des Henkels (26) nach einer etwa lotrecht zur Achse (A1) der Antriebswelle (10) verlaufenden Querrichtung erstreckt, und dass das Verstärkungsteil (30) ein Querende umfasst, in dem eine Bohrung (32) vorgesehen ist, die die kreisförmige Öffnung (28) abgrenzt.

4. Wischsystem nach Anspruch 3, **dadurch gekennzeichnet, dass** das Verstärkungsteil (30) des Henkels (26) etwa die Form einer Platte aufweist.

5. Wischsystem nach einem der Ansprüche 2 bis 4, **dadurch gekennzeichnet, dass** das Verstärkungsteil (30) aus einem einzigen Stück mit einem Ende (22) des Verbindungsarms (20) besteht, das im Lagerkörper (14) eingelassen ist.

6. Wischsystem nach Anspruch 5, **dadurch gekennzeichnet, dass** der Verbindungsarm (20) die Form eines hohlen Rohrs aufweist, und dass das im Lagerkörper (14) eingelassene Ende (22) des Arms (20) abgeflacht ist.

7. Wischsystem nach Anspruch 1, **dadurch gekennzeichnet, dass** das Verstärkungsteil (36) eine Vertiefung (38) abgrenzt, in der ein Ende (22) des Verbindungsarms (20) aufgenommen wird.

8. Wischsystem nach Anspruch 7, **dadurch gekennzeichnet, dass** die vom Verstärkungsteil (36) abgegrenzte Vertiefung (38) etwa zylindrisch ist, und dass das Verstärkungsteil (36) einen nicht drehbaren Abschnitt aufweist, um Drehungen des Verstärkungsteils (36) im Lagerkörper (14) zu verhindern.

9. Wischsystem nach einem der vorherigen Ansprüche, **dadurch gekennzeichnet, dass** der Lagerkörper (14) ein Verstärkungsteil (30) des Henkels (26) und ein Einsatzteil (36) umfasst, das eine Vertiefung (38) abgrenzt, in der ein Ende (22) des Verbindungsarms (20) aufgenommen wird.

10. Wischsystem nach Anspruch 9, **dadurch gekennzeichnet, dass** die beiden Verstärkungsteile (30, 36) aus einem Stück bestehen.
